# DEMANDE DE BREVET EUROPEEN

(11) **EP 1 030 087 A1**
(43) Date de publication de la demande: **23.08.2000**
(21) Numéro de dépôt: 00490007.2
(22) Date de dépôt: 11.02.2000
(51) Int. Cl.: F16K 17/38

(54) **Dispositif de sécurité pour robinet à eau chaude sanitaire et robinet notamment thermostatique pourvu du dit élément de sécurité**

(30) Priorité: 16.02.1999 FR 9902038
(71) Demandeur: WATTS EUROTHERM S.A., 80390 Fressenneville (FR)
(72) Inventeur: Bongrand, Laurent, 36400 Verneuil S/Igneraie (FR); Bommelaer, Christian, 80460 Friaucourt (FR)
(74) Mandataire: Ecrepont, Robert

(57) **Abrégé**

L'invention se rapporte à un dispositif de sécurité pour robinet à eau chaude sanitaire **CARACTERISE** en ce qu'il comprend :
- un logement (10) traversant, de part en part, une enveloppe ayant la forme d'un Té,
- délimité dans l'alésage prés de son extrémité amont, un siège (14) de clapet (15), et
- monté dans le logement depuis l'extrémité amont :
   . un clapet (15) avec un organe (16) élastique le sollicitant vers sa position dite de fermeture et
   . une tige (17) dite de manoeuvre du clapet comprenant localement un matériau (19) fusible qui, lorsqu'il est soumis à une température supérieure à une température prédéterminée, fond de sorte que la longueur de la tige de manoeuvre se réduit et induit ainsi la fermeture du clapet.

## Description

L'invention se rapporte à un dispositif de sécurité pour robinet à eau chaude sanitaire, tel un robinet thermostatique.

Elle se rapporte également au robinet notamment thermostatique pourvu du dit dispositif de sécurité.

Classiquement, un robinet dit thermostatique comprend :
- un corps délimitant localement une chambre dite de mélange alimentée, d'une part, au moins indirectement par un conduit d'arrivée d'eau froide et, d'autre part, au moins indirectement par un conduit d'arrivée d'eau chaude,
- une sortie d'eau mitigée ayant une température prédéterminée et
- un dispositif d'ajustement des débits d'eau froide et d'eau chaude pour obtenir une eau dite de sortie à la température appropriée, lequel dispositif comprend un élément qui, sensible à la température de l'eau dans la chambre de mélange, commande le déplacement d'un tiroir de distribution modifiant les sections de passage des entrées d'eau chaude et d'eau froide en fonction d'une consigne.

Ainsi, lorsque l'eau dans la chambre de mélange dépasse la température de consigne, l'élément sensible réduit la section de passage de l'arrivée d'eau chaude et, en même temps, augmente la section de passage de l'eau froide et, vice et versa, si la température est inférieure à la température de consigne.

L'élément sensible présente nécessairement une inertie pour éviter que le système soit constamment instable.

Cette inertie est bien entendue néfaste en cas de coupure brutale de l'eau froide puisqu'alors la montée en température de l'eau en sortie est immédiate et peut atteindre des températures dangereuses si l'eau entre en contact avec la peau.

Les développements actuels ont pour objectif de perfectionner ces éléments sensibles notamment pour obtenir une réponse plus rapide mais les résultats ne sont pas encore à la hauteur du but visé.

On connaît des éléments fusibles en plomb (DE-6.921.553) associés à un clapet mais qui ne peuvent résoudre le problème de la sensibilité dans les robinets thermostatiques où la température est bien inférieure.

Un des résultats que l'invention vise à obtenir est d'améliorer notamment la sécurité des robinets d'eau chaude sanitaires, tels les robinets thermostatiques.

A cet effet, l'invention a pour objet un dispositif de sécurité pour un tel robinet caractérisé en ce que le dispositif comprend :
- une enveloppe délimitant un logement traversant, de part en part, la dite enveloppe avec l'une des deux extrémités du dit logement, dite extrémité amont, qui présente au moins indirectement des moyens de raccordement hydraulique avec la sortie d'un robinet d'eau chaude et, en amont de l'autre extrémité, un conduit dit d'évacuation, d'une part, débouchant hors de l'enveloppe et, d'autre part, se raccordant hydrauliquement en un point intermédiaire aux deux extrémités du logement conférant à l'enveloppe la forme d'un Té,
- délimité dans l'alésage prés de son extrémité amont, un siège de clapet, et
- monté dans le logement depuis l'extrémité amont :
   . un clapet avec un organe élastique le sollicitant vers sa position dite de fermeture en l'appliquant sur le siège et
   . une tige dite de manoeuvre du clapet, reliée à un dispositif de commande apte à pousser le dit clapet vers la position dite ouverture en contrariant l'action de l'organe élastique précité, entre le clapet et le dispositif de commande, cette tige de manoeuvre comprenant localement un matériau fusible qui, lorsqu'il est soumis à une température supérieure à une température prédéterminée, fond de sorte que la longueur de la tige de manoeuvre se réduit et induit ainsi la fermeture du clapet.

L'invention sera bien comprise à l'aide de la description ci-après faite à titre d'exemple non limitatif, en regard du dessin ci-annexé qui représente schématiquement :

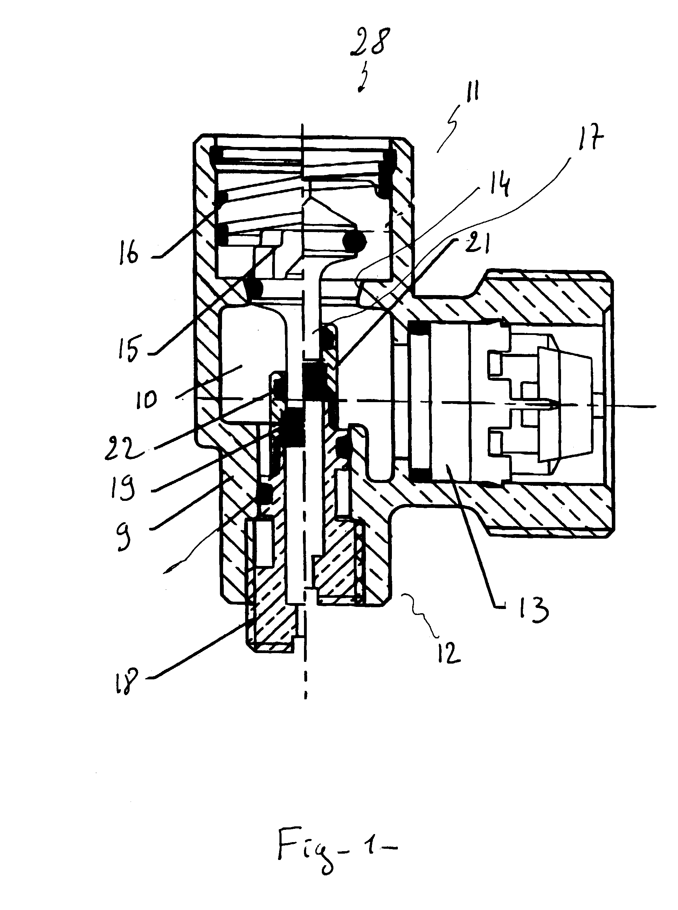

- figure 1 : coupe axiale d'un dispositif de sécurité,

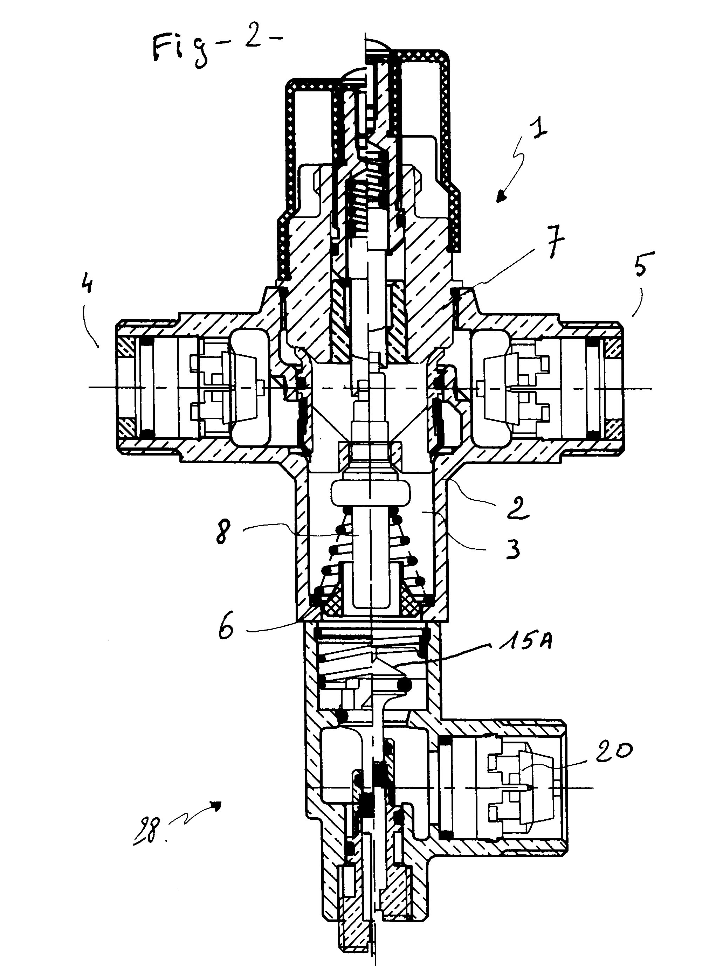

- figure 2 : coupe axiale d'un dispositif de sécurité monté sur un robinet thermostatique,

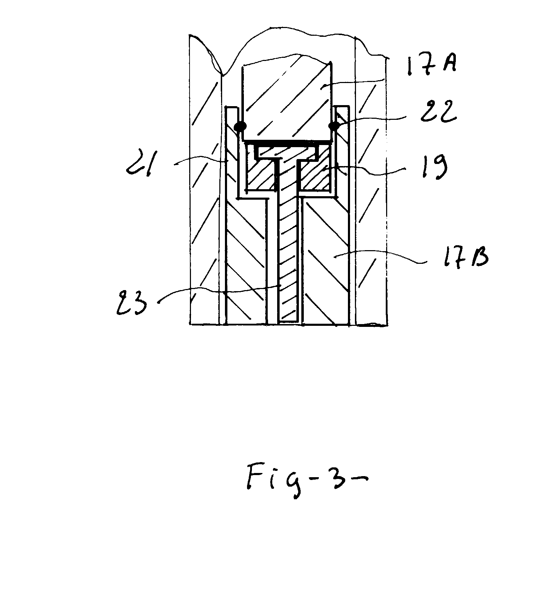

- figure 3 : un détail de réalisation.

En se reportant, au dessin on voit un robinet 1 d'eau chaude sanitaire tel un robinet thermostatique.

Un tel robinet 1 thermostatique comprend :
- un corps 2 délimitant localement une chambre 3 dite de mélange alimentée, d'une part, au moins indirectement par un conduit 4 d'arrivée d'eau froide et, d'autre part, au moins indirectement par un conduit 5 d'arrivée d'eau chaude,
- une sortie 6 d'eau mitigée ayant une température prédéterminée et
- un dispositif 7 d'ajustement des débits d'eau froide et d'eau chaude pour obtenir une eau dite de sortie à la température appropriée, lequel dispositif comprend un élément 8 qui, sensible à la température de l'eau dans la chambre de mélange, commande le déplacement d'un tiroir de distribution modifiant les sections de passage des entrées d'eau chaude et d'eau froide en fonction d'une consigne.

Ainsi, lorsque que l'eau dans la chambre de mélange dépasse la température de consigne, l'élément sensible réduit la section de passage de l'arrivée d'eau chaude et, en même temps, augmente la section de passage de l'eau froide et, vice et versa, si la température est inférieure à la température de consigne.

L'élément sensible présente nécessairement une inertie pour éviter que le système soit constamment instable.

Pour éviter que cette inertie ait des conséquences néfastes, selon une caractéristique, le robinet est équipé en aval de la sortie 6 d'eau chaude d'un dispositif de sécurité 28 obturant la sortie en réponse à une température excessive.

Selon une caractéristique de l'invention, le dispositif de sécurité 28 comprend :
- une enveloppe 9 délimitant un logement 10 traversant, de part en part, la dite enveloppe avec l'une (11) des deux extrémités 11, 12 du dit logement, dite extrémité amont 11, qui présente au moins indirectement des moyens de raccordement hydraulique avec la sortie d'un robinet d'eau chaude et, en amont de l'autre extrémité 12, un conduit 13 dit d'évacuation, d'une part, débouchant hors de l'enveloppe et, d'autre part, se raccordant hydrauliquement en un point intermédiaire aux deux extrémités du logement conférant à l'enveloppe la forme d'un Té,
- délimité dans l'alésage prés de son extrémité amont, un siège 14 de clapet 15, et
- monté dans le logement depuis l'extrémité amont :
   . un clapet 15 avec un organe 16 élastique le sollicitant vers sa position dite de fermeture en l'appliquant sur le siège 14 et
   . une tige 17 dite de manoeuvre du clapet, reliée à un dispositif 18 de commande apte à pousser le dit clapet vers la position dite ouverture en contrariant l'action de l'organe élastique précité, entre le clapet et le dispositif de commande, cette tige de manoeuvre comprenant localement un matériau 19 fusible qui, lorsqu'il est soumis à une température supérieure à une température prédéterminée, fond de sorte que la longueur de la tige de manoeuvre se réduit et induit ainsi la fermeture du clapet.

Avantageusement, le conduit d'évacuation loge un clapet anti-retour 20.

De préférence, la tige 17 de manoeuvre du clapet est en deux pièces 17A, 17B:
- l'une (17A) des pièces est solidaire du clapet et forme une queue de soupape qui s'étend selon l'axe longitudinal de l'alésage et
- l'autre pièce (17B) vient en appui sur l'extrémité libre de la queue par l'intermédiaire du matériau 19 fusible.

De préférence, ce matériau 19 fusible est logé dans une chemise 21 isolant le matériau fusible des variations fugaces de température.

Cette chemise permet en outre d'isoler physiquement le matériau fusible de l'eau et d'éviter, lorsque le matériau fusible fond de se mélanger à l'eau. Cela est important car les matériaux fusibles sont à ce jour toxiques.

La queue du clapet s'engage partiellement dans cette chemise.

Un joint 22 torique disposé à l'entrée de la chemise 21 complète l'isolation du matériau fusible de l'eau.

Cette isolation thermique crée ainsi un léger effet retard évitant les transitoires qui sont admis par la législation car, compte tenu de la durée très courte acceptée, ces pointes de températures ne sont pas dangereuses.

En effet, si l'eau ne dépasse la température requise que, pendant un bref moment, l'excès de température sera dissipé, après un bref parcours, dans la canalisation aval.

L'utilisation d'un matériau fusible nécessite son remplacement lorsque celui-ci s'est déclenché.

Cela oblige l'installateur à se poser la question de ce qui est à l'origine de l'incident et donc à vérifier le bon fonctionnement du reste de l'installation.

Le remplacement du fusible peut se faire sans coupure de l'eau alimentant le robinet d'eau chaude puisque le clapet est venu en position de fermeture.

Un tel dispositif permet en outre de vérifier facilement l'efficacité du clapet anti-retour placé en aval ou du clapet, c'est à dire son étanchéité.

Le démontage de la partie fusible permet le contrôle de l'étanchéité en mettant la chambre contenant le fusible à l'atmosphère.

De préférence, est prévu un témoin 23 visualisant la fusion du fusible.

Par exemple, le fusible enveloppe l'extrémité d'un pion.

Lorsque le fusible fond, le pion recule, déplacé en cela par la tige 17A du clapet 15 et fait saillie à l'extérieur.

La mise en sécurité est donc visible.

Le dispositif de manoeuvre de la soupape comprendra des moyens de coopération, par exemple, avec le logement pour permettre le déplacement commandé de la soupape.

La tige du dispositif de manoeuvre sera filetée et l'alésage taraudé afin qu'ils coopèrent.

Des joints d'étanchéité sont bien entendu prévus.

Un tel système de sécurité pourra venir s'ajouter aux robinets thermostatiques déjà existants de manière à les rendre conformes à une nouvelle réglementation.

On notera que la tête du clapet 15 est dirigé vers le flux et la queue du clapet est placée en aval de sorte que cela favorise la vitesse de réaction du clapet en cas de surchauffe.

Cela augmente en outre la précision.

En effet, c'est toute la surface 15A du clapet qui reçoit le flux d'eau.

## Revendications

1. Dispositif de sécurité pour robinet à eau chaude sanitaire **CARACTERISE** en ce qu'il comprend :
- une enveloppe (9) délimitant un logement (10) traversant, de part en part, la dite enveloppe avec l'une (11) des deux extrémités (11, 12) du dit logement, dite extrémité amont (11), qui présente au moins indirectement des moyens de raccordement hydraulique avec la sortie d'un robinet d'eau chaude et, en amont de l'autre extrémité (12), un conduit (13) dit d'évacuation, d'une part, débouchant hors de l'enveloppe et, d'autre part, se raccordant hydrauliquement en un point intermédiaire aux deux extrémités du logement conférant à l'enveloppe la forme d'un Té,
- délimité dans l'alésage prés de son extrémité amont, un siège (14) de clapet (15), et
- monté dans le logement depuis l'extrémité amont :
. un clapet (15) avec un organe (16) élastique le sollicitant vers sa position dite de fermeture en l'appliquant sur le siège (14) et
. une tige (17) dite de manoeuvre du clapet, reliée à un dispositif (18) de commande apte à pousser le dit clapet vers la position dite ouverture en contrariant l'action de l'organe élastique précité, entre le clapet et le dispositif de commande, cette tige de manoeuvre comprenant localement un matériau (19) fusible soumis à l'effet de la température de l'eau qui, lorsqu'il est soumis à une température supérieure à une température prédéterminée, fond de sorte que la longueur de la tige de manoeuvre se réduit et induit ainsi la fermeture du clapet.

2. Dispositif de sécurité selon la revendication 1 **caractérisé** en ce que la tige (17) de manoeuvre du clapet est en deux pièces (17A, 17B) :
- l'une (17A) des pièces est solidaire du clapet et forme une queue de soupape qui s'étend selon l'axe longitudinal de l'alésage et
- l'autre pièce (17B) vient en appui sur l'extrémité libre de la queue par l'intermédiaire du matériau (19) fusible.

3. Dispositif de sécurité selon la revendication 1 ou 2 **caractérisé** en ce que le matériau (19) fusible est logé dans une chemise (21) isolant le matériau fusible des variations fugaces de température.

4. Dispositif de sécurité selon la revendication 3 **caractérisé** en ce que :
- la queue du clapet s'engage partiellement dans cette chemise et
- un joint (22) torique disposé à l'entrée de la chemise (21) complète l'isolation du matériau fusible de l'eau.

5. Dispositif de sécurité selon la revendication 1 **caractérisé** en ce que le conduit d'évacuation loge un clapet anti-retour (20).

6. Dispositif de sécurité selon la revendication 1 **caractérisé** en ce qu'il comprend un témoin (23) visualisant la fusion du fusible.

7. Robinet notamment thermostatique **caractérisé** en ce qu'il est pourvu d'un dispositif de sécurité selon l'une quelconque des revendications 1 à 6.
